# EUROPÄISCHE PATENTSCHRIFT

(11) **EP 2 994 325 B1**
(45) Veröffentlichungstag und Bekanntmachung des Hinweises auf die Patenterteilung: **09.08.2017**
(21) Anmeldenummer: 14758565.7
(22) Anmeldetag: 03.09.2014
(51) Int. Cl.: B60G 7/00, B60G 9/00, B60G 21/05, B60B 35/00

(54) **ACHSANBINDUNG**
AXLE CONNECTION
ACCOUPLEMENT D'ESSIEU

(30) Priorität: 10.09.2013 DE 102013218028
(43) Veröffentlichungstag der Anmeldung: 16.03.2016
(73) Patentinhaber: SAF-HOLLAND GmbH, 63856 Bessenbach (DE)
(72) Erfinder: DREWES, Olaf, 63743 Aschaffenburg (DE); BIEWER, Frederik, 63808 Haibach (DE)
(74) Vertreter: Müller Schupfner & Partner Patent- und Rechtsanwaltspartnerschaft mbB
(86) Internationale Anmeldenummer: PCT/EP2014/068684
(87) Internationale Veröffentlichungsnummer: WO 2015/036294

(56) Entgegenhaltungen:
- WO-A1-02/20288
- WO-A1-2008/017351
- DE-A1-102011 086 480
- GB-A- 2 396 140

## Beschreibung

Die vorliegende Erfindung betrifft eine Achsanbindung, insbesondere für ein Nutzfahrzeug.

Eine Achsanbindung beschreibt den Knotenpunkt zwischen einem Längslenker, insbesondere eines Nutzfahrzeugs, und einem Achsrohr. Selbstverständlich sind meist zwei Achsanbindungen vorgesehen, da das Achsrohr in der Regel durch zwei Längslenker geführt wird. An den jeweiligen Enden des Achsrohrs befinden sich in der Regel Achsstummel bzw. alternative geeignete Anbauteile, um die Bremseinheiten und die Räder zu befestigen. Im Bereich der Achsanbindung sind grundsätzlich auch Komponenten bzw. Vorrichtungen vorgesehen, um Feder-/Dämpferkomponenten, wie zum Beispiel Luftfederelemente, anordnen zu können. Das Bauteil, an welchem das Luftfederelement angeordnet ist, wird im Stand der Technik in der Regel als "Tailend" bezeichnet. Aufgrund der verschiedenen Funktionalitäten, die in der Achsanbindung integriert sind, sind diese Knotenpunkte konstruktiv oft sehr aufwendig und in der Folge auch unflexibel gestaltet. So müssen beispielsweise unterschiedliche Längslenker seitens der Hersteller vorgehalten werden, wenn Luftfederelemente mit unterschiedlichen Einbauhöhen verbaut werden sollen. Eine derartige Variantenvielfalt ist immer mit Kostennachteilen verbunden.

Die DE 10 2011 086 480 A1 betrifft ein Lenkerelement, ein erstes Achselement und ein zweites Achselement, welche an dem Lenkerelement derart festgelegt sind, dass ein Aufnahmeabschnitt zur Festlegung eines Federelements von einer der Achsen geschnitten wird.

Die GB 2 396 140 A, die WO 02/20288 A1 und die WO 2008/017351 A1 betreffen allesamt Achsaggregate für Fahrzeuge, bestehend aus einer Achse sowie einem Längslenker, der an der Achse festlegbar ist, wobei der Längslenker einen Bereich zur Anordnung einer Luftfeder sowie einen gegenüberliegenden Bereich zur schwenkbaren Anordnung an einem Fahrzeugrahmenteil aufweist.

Es ist daher Aufgabe der vorliegenden Erfindung, eine Achsanbindung, insbesondere für ein Nutzfahrzeug, anzugeben, welche kostengünstig ist und gleichzeitig höchste Flexibilität bietet.

Diese Aufgabe wird durch eine Achsanbindung nach Anspruch 1 gelöst. Weitere Vorteile und Merkmale der Erfindung ergeben sich aus den Unteransprüchen sowie der Beschreibung und den beigefügten Figuren.

Erfindungsgemäß umfasst eine Achsanbindung, insbesondere für ein Nutzfahrzeug, eine Achsrohraufnahme, welche eine Längsachse aufweist, die parallel zu einem daran anordenbaren Achsrohr orientiert ist, zumindest einen Verbindungsbereich, insbesondere zur Verbindung mit einem Längslenker, und einen Stützabschnitt, insbesondere zur Anordnung eines Tailends, wobei die Achsanbindung eine Drehachse aufweist, welche die Längsachse schneidet, und wobei der Verbindungsbereich symmetrisch zu einer Drehebene ausgebildet bzw. angeordnet bzw. positioniert ist, welche von der Drehachse und der Längsachse aufgespannt wird, wobei der Stützabschnitt zumindest bereichsweise quer zur Drehebene versetzt ist. Vorteilhafterweise entspricht die Längsachse einer Mittellinie bzw. Zylinderachse des Achsrohrs, welches in der Regel rund, insbesondere kreisrund, ist. Es versteht sich, dass das Achsrohr auch zumindest bereichsweise im Querschnitt polygonförmig bzw. eckig ausgeführt sein kann. Unabhängig von der Form des Achsrohrs ist die Achsrohraufnahme ausgelegt, mit ihrer Innenfläche an oder auf dem Achsrohr zumindest bereichsweise formschlüssig angeordnet zu werden. Zweckmäßigerweise umschließt die Achsrohraufnahme also das Achsrohr zumindest bereichsweise, so dass eine form- und/oder kraftschlüssige Aufnahme bzw.

Anordnung des Achsrohrs in bzw. an der Achsrohraufnahme ermöglicht ist. Alternativ bevorzugt umschließt die Achsrohraufname das Achsrohr aber auch nicht vollständig, sondern ist "auf Stoß" angeordnet, wobei es beispielsweise verschweißt ist. Vorteilhafterweise umfasst die Achsanbindung den zumindest einen Verbindungsbereich, insbesondere zur Verbindung mit dem Längslenker und dem Stützabschnitt, insbesondere zur Anordnung des Tailends. Bezogen auf die Längsachse sind der Verbindungsbereich und der Stützabschnitt im Wesentlichen gegenüberliegend angeordnet bzw. erstrecken sich im Wesentlichen voneinander weg. Mit Vorteil ist der Verbindungsbereich für eine form- und/oder kraftschlüssige Verbindung mit dem Längslenker ausgebildet. Beispielsweise ist der Verbindungsbereich derart gestaltet, dass ein Verschweißen mit dem Längslenker schnell und unkompliziert möglich ist. Vorzugsweise umfasst der Verbindungsbereich hierzu bereits entsprechende Anschrägungen an seinen Kanten, um gegebenenfalls das Ziehen einer Kehlnaht zu erleichtern. Erfindungsgemäß ist der Verbindungsbereich symmetrisch zur Drehebene positioniert, wobei die Drehebene von der Drehachse und der Längsachse aufgespannt wird. Dabei ist mit Drehachse gemeint, dass die Achsanbindung um die Drehachse herum um 180° von einem ersten in einen zweiten Montagezustand bringbar ist. Da der Stützabschnitt zumindest bereichsweise quer zur Drehebene versetzt ist, können beim Drehen der Achsanbindung um die Drehachse von dem ersten in den zweiten Montagezustand verschiedene Positionen für den Stützabschnitt realisiert werden. Mit Vorteil wird dies dadurch realisiert, dass der Stützabschnitt, wie bereits erwähnt, quer zur Drehebene versetzt ist. Es versteht sich, dass der Stützabschnitt auch zumindest bereichsweise auf der Drehachse bzw. in der Drehebene liegen kann, wenn der Stützabschnitt zur Drehebene gesehen zumindest teilweise asymmetrisch ausgeführt ist. Alternativ kann der Stützabschnitt auch zur Drehebene gesehen symmetrisch ausgebildet sein, wenn er in seiner Position zur Drehebene versetzt ist. Besonders bevorzugt ist der Stützabschnitt zur Drehebene gesehen sowohl asymmetrisch ausgebildet als auch zu ihr versetzt angeordnet. Aus dem Stand der Technik sind derartige Achsanbindungen nicht bekannt, so dass die verschiedenen Vorteile und Merkmale, die die Achsanbindungen aufweisen, meist anderen Bauteilen oder Komponenten zugewiesen sind. Dies führt z. B. zu verschiedensten Varianten an Längslenkern, die durch die Einführung der Achsanbindung(en) reduziert werden können. Die Anzahl der Varianten an Achsanbindungen selbst kann mit Vorteil äußerst gering gehalten werden, da sie von einem ersten in einen zweiten Montagezustand bringbar sind, woraus sich mit ein und derselben Achsanbindung unterschiedliche Möglichkeiten zur Anordnung des Tailends ergeben.

Vorteilhafterweise ist die Achsrohraufnahme als zumindest bereichsweise, vorzugsweise vollständig geschlossener Zylinder ausgebildet, welcher sich zumindest bereichsweise entlang der Längsachse erstreckt. Wie bereits angedeutet kann der Zylinder im Querschnitt verschiedene Formen annehmen. Besonders bevorzugt ist allerdings eine runde, insbesondere eine kreisrunde, Querschnittsform des Zylinders. Nichtsdestotrotz gibt es auch zum Beispiel eckig geformte Achsrohre, so dass für diese Anwendungen die Achsrohraufnahme ebenfalls eckig oder polygonförmig ausgebildet sein kann. Das "zumindest bereichsweise" ist dahingehend zu interpretieren, dass über den Umfang des Zylinder mit Vorteil ein oder mehrere Löcher vorgesehen sein können, welche vorteilhafterweise dazu genutzt werden können, die Achsanbindung, und insbesondere die Achsrohraufnahme mit dem Achsrohr zu verschweißen. Grundsätzlich gilt, dass mit Vorteil zwischen dem Achsrohr und der Achsrohraufnahme eine Lochschweißung ausgebildet ist, wodurch der Wärmeeintrag beim Verschweißen in das Achsrohr reduziert werden kann, da dieses nicht umfänglich mit der Achsrohraufnahme verschweißt werden muss. Dabei muss der Zylinder entlang der Längsachse nicht streng zylindrisch ausgebildet sein. Vielmehr kann der Zylinder bevorzugt entlang der Längsachse auch Ausnehmungen, Ausstülpungen oder dergleichen aufweisen, um so unter Umständen die Krafteinleitung in das Achsrohr noch weiter zu verbessern. So können die Ausstülpungen als polygonförmige oder hyperbelförmige Übergänge ausgebildet sein, die eine hinsichtlich der auftretenden Belastungen auftretende Krafteinleitung vom Achsrohr in die Achsrohraufnahme, und umgekehrt, ermöglichen.

Ebenfalls bevorzugt ist die Achsrohraufnahme als im Wesentlichen zylindrische Schale ausgebildet, welche sich zumindest bereichsweise entlang der Längsachse erstreckt. Mit Vorteil umfasst die Achsrohraufnahme das Achsrohr in Umfangsrichtung also nicht vollständig. Je nach Anforderung sind die verschiedensten Umschlingungswinkel denkbar. Ein Umschlingungswinkel < 180° bringt den großen Vorteil mit sich, dass das Achsrohr sehr leicht in der Achsrohraufnahme bzw. in der (zylindrischen) Schale anordenbar ist.

Grundsätzlich gilt, dass die Achsanbindung zumindest im Bereich der Achsrohraufnahme als Hohlkörper ausgebildet sein kann. Die Achsanbindung kann mit anderen Worten den Zylinder oder auch die im Wesentlichen zylindrische Schale umfassen. Alternativ bevorzugt kann die Achsrohraufnahme auch durch entsprechende Öffnungen in dem Hohlkörper gebildet werden, wobei die Öffnungen das Achsrohr komplett oder auch nur teilweise umschließen. Die Öffnungen mit ihren entsprechenden Innenflächen stellen dann die Achsrohraufnahme dar. Bei dieser Variante wird allerdings zwischen dem Achsrohr und der Achsrohraufnahme nur ein Linienkontakt realisiert, sofern nicht weitere Elemente zur Befestigung zwischen dem Achsrohr und der Achsrohranbindung vorgesehen sind.

Wie bereits angedeutet, weist die Achsrohraufnahme mit Vorteil zumindest eine Innenfläche und/oder zumindest eine seitliche Kontur zur Anordnung des Achsrohrs und/oder eines Achsstummels auf. Mit Vorteil kann die Achsanbindung an einer oder an beiden seitlichen Konturen beispielsweise einen Bund oder dergleichen aufweisen, welcher zur Anordnung in und/oder an einem Achsrohr oder in und/oder an einem Achsstummel ausgelegt ist. Mit Vorteil können mittels des Bundes die verschiedenen Komponenten zueinander zentriert werden. Die eigentliche Festlegung der Komponenten erfolgt dann mit Vorteil über umfängliches Verschweißen. Es versteht sich, dass auch umgekehrt das Achsrohr und/oder der Achsstummel einen Bund oder dergleichen aufweisen können. Grundsätzlich sind die verschiedensten Kombinationsmöglichkeiten denkbar. So kann das Achsrohr auch über die Innenfläche der Achsrohraufnahme an der Achsanbindung angeordnet sein, während gleichzeitig der Achsstummel an der seitlichen Kontur angeordnet ist etc.

Zweckmäßigerweise ist der Verbindungsbereich zumindest ein Bereich der Achsrohraufnahme. So kann beispielsweise mit Vorteil der Längslenker direkt auf die Achsrohraufnahme, welche vorteilhafterweise in diesem Bereich dann entsprechend verstärkt ist, angeordnet, insbesondere verschweißt, werden. Hierbei kann die Achsrohraufnahme als zumindest bereichsweise geschlossener Zylinder oder als im Wesentlichen zylindrische Schale ausgebildet sein. Der Verbindungsbereich kann nämlich mit Vorteil sowohl an einer Außenkontur der Achsrohraufnahme ausgebildet sein, als auch durch die Kanten des Achsrohraufnahme gebildet werden, beispielsweise wenn diese als zylindrische Schale ausgebildet ist. Mit Vorteil liegen dann die Kanten der Achsrohraufnahme derart, dass sie symmetrisch zur Drehebene positioniert sind.

Zweckmäßigerweise ist der Verbindungsbereich als Fortsatz ausgebildet, welcher sich entlang der Drehachse von der Achsrohraufnahme weg erstreckt. Mit Vorteil kann es sich bei dem Fortsatz um einen im Wesentlichen geschlossenen Hohlkörper handeln. Bevorzugt ermöglicht der Fortsatz bzw. der Hohlkörper eine Art Übergang zu einer Geometrie bzw. zu einem Querschnitt des anzuordnenden Längslenkers. Mit Vorteil werden der Längslenker und der Fortsatz form- und/oder kraftschlüssig verbunden, beispielsweise indem sie verschweißt werden. Der Fortsatz selbst kann einstückig mit der Achsrohraufnahme gebildet sein. So kann die Achsrohraufnahme zusammen mit dem Fortsatz beispielsweise in einem Hochdruckumformverfahren hergestellt sein. Alternativ bevorzugt ist der Fortsatz aber auch form- und/oder kraftschlüssig mit der Achsrohraufnahme verbunden, beispielsweise verschweißt.

Vorteilhafterweise weist der Fortsatz eine Verbindungsebene auf, die im Wesentlichen quer, insbesondere senkrecht, zur Drehachse steht. Mit anderen Worten dient die Verbindungsebene der Anordnung des Längslenkers bzw. stellt die Schnittstelle dar. Um in beiden Montagezuständen die "gleiche" Schnittstelle vorhalten zu können, ist die Verbindungsebene bezogen auf die Drehebene vorteilhafterweise symmetrisch ausgebildet bzw. steht senkrecht dazu. Vorteilhafterweise bildet der Verbindungsbereich grundsätzlich eine Verbindungsebene aus. So können auch beispielsweise zwei Kanten der als zylindrische Schale ausgebildeten Achsrohraufnahme die Verbindungsebene formen, an welcher dann mit Vorteil der Längslenker angeordnet werden kann.

Mit Vorteil sind der Verbindungsbereich und die Achsrohraufnahme im Wesentlichen entlang der Längsachse versetzt zueinander angeordnet. Hierbei muss berücksichtigt werden, dass die Drehachse sozusagen eine Symmetrielinie des Verbindungsbereichs darstellt. Dies ergibt sich schon daraus, dass der Verbindungsbereich symmetrisch zur Drehebene positioniert bzw. ausgebildet ist. Ist nun die Achsrohraufnahme entlang der Längsachse versetzt zum Verbindungsbereich angeordnet, so ergeben sich durch diese asymmetrische Anordnung unterschiedliche Positionen entlang der Längsrichtung der Achsrohraufnahme im ersten und zweiten Montagezustand relativ zum Verbindungsbereich gesehen. Mit Vorteil ist dadurch eine Anpassung an die unterschiedlichsten Platzverhältnisse möglich. Ebenfalls mit Vorteil kann die Abstützbreite am Achsrohr verändert werden, es kann also das Achsrohr an verschiedenen Stellen mit dem Längslenker verbunden sein, wodurch die Kraftanleitung in das Achsrohr beeinflussbar ist. Vorteilhafterweise ist der Stützabschnitt im Wesentlichen entlang der Längsachse versetzt zur Drehachse positioniert. Ähnlich dem vorgenannten Beispiel können damit in der ersten und zweiten Montageposition unterschiedliche Positionen für den Stützabschnitt realisiert werden. Es versteht sich, dass zwischen dem Stützabschnitt, der Achsrohraufnahme und dem Verbindungsbereich sämtliche denkbaren Positionen entlang der Längsachse möglich sind. Es versteht sich, dass der Verbindungsbereich, die Achsrohraufnahme und der Stützabschnitt auch parallel zur Drehachse - sozusagen auf einer Linie - angeordnet sein können. Ebenso ist es möglich, dass der Verbindungsbereich, die Achsrohraufnahme und der Stützabschnitt, bezogen auf die Drehachse symmetrisch angeordnet sein können. Die genannten Kombinationen stellen keine abschließende Aufzählung dar.

Wie bereits erwähnt, können die Achsanbindung oder zumindest Teile davon mittels eines Hochdruckumformverfahrens hergestellt werden. Es versteht sich, dass die Achsanbindung aber auch kostengünstig als Schweißkonstruktion ausgebildet sein kann. So kann die Achsrohraufnahme selbst aus mehreren Teilen bestehen, welche entsprechend aneinander geschweißt sind. Ähnliches gilt für den Stützabschnitt oder den als Fortsatz ausgebildeten Verbindungsbereich.

Wie bereits erwähnt, ist die Achsanbindung erfindungsgemäß in zwei Montagezuständen an dem Achsrohr anordenbar, wobei sich ein erster Montagezustand von einem zweiten Montagezustand dahingehend unterscheidet, dass die Achsanbindung um einen Winkel von etwa 180° um die Drehachse gedreht ist, wobei die Achsanbindung derart ausgelegt ist, dass der Verbindungsbereich im ersten und im zweiten Montagezustand gleich positioniert ist. Dadurch, dass der Stützabschnitt zumindest bereichsweise quer zur Drehebene versetzt ist und zusätzlich auch noch im Wesentlichen entlang der Längsachse versetzt zur Drehachse angeordnet werden kann, sind mit Vorteil die unterschiedlichsten Positionen für den Stützabschnitt realisierbar. Mit Vorteil kann dadurch das Tailend sowohl entlang der Längsachse als auch bezogen auf eine Fahrbahnebene in den unterschiedlichsten Positionen angeordnet werden. Die Anordnung des Tailends erfolgt mit Vorteil in bzw. am Stützabschnitt, beispielsweise über eine Schweißverbindung. Der Stützabschnitt kann auch derart ausgebildet sein, dass er ein Stecksystem zur Anordnung des Tailends bereitstellt. Das Tailend kann also auch auf den Stützabschnitt gesteckt und mit geeigneten Befestigungsmittel befestigt werden. Grundsätzlich gilt, dass der Stützabschnitt Befestigungsöffnung zur Anordnung geeigneter Befestigungsmittel aufweisen kann.

Vorteilhafterweise erstreckt sich der Stützabschnitt entlang einer Stützachse, wobei die Stützachse und die Drehachse bevorzugt einen Winkel von etwa 2 - 90° bilden. Bevorzugt bildet die Stützachse zusammen mit der Drehachse einen Winkel von etwa 8-60°, besonders bevorzugt von etwa 15-45°. Dabei bemisst sich der Winkel von der Stützachse aus gesehen weg vom Verbindungsbereich in Richtung der Drehachse.

Vorteilhafterweise erstreckt sich der Stützabschnitt entlang der Stützachse von der Achsrohraufnahme weg, wobei der Stützabschnitt zumindest eine Stützfläche aufweist. Quer zur Stützachse gesehen kann der Stützabschnitt die unterschiedlichsten Querschnittsflächen bzw. Außenkonturen aufweisen. Vorteilhafterweise wird eine eckige, insbesondere eine viereckige, Form gewählt. Der Querschnitt kann aber auch rund, oval oder insbesondere auch kreisrund ausgebildet sein, abhängig von der Form und der Art und Weise der Anordnung des Tailends. Zur Anordnung bzw. Abstützung des Tailends ist die zumindest eine Stützfläche vorgesehen.

Zweckmäßigerweise verlaufen zwei Stützflächen im Wesentlichen parallel zur Stützachse, während eine Stützfläche im Wesentlichen quer zur Stützachse verläuft. Mit Vorteil kann die Stützfläche, welche im Wesentlichen quer zur Stützachse verläuft, zur Abstützung des Tailends in Richtung der Längsachse verwendet werden. Im Gegensatz dazu werden die Stützflächen, welche im Wesentlichen parallel zur Stützachse verlaufen, zur Abstützung des Tailends im Wesentlichen quer zur Drehachse verwendet. Grundsätzlich ist der Stützabschnitt dazu ausgelegt, dass das Tailend form- und/oder kraftschlüssig angeordnet werden kann. So kann das Tailend beispielsweise auf den Stützabschnitt gesteckt sein, das heißt das Tailend weist einen entsprechenden Hohlraum auf, in welchen der Stützabschnitt hineinragen kann. Ebenfalls bevorzugt kann das Tailend auch an dem Stützabschnitt derart aufliegen, dass es über die Stützflächen anschweißbar ist.

Mit Vorteil weist eine bezogen auf die Drehebene obere Stützfläche im ersten Montagezustand einen gleichen Winkel zur Drehachse auf, wie eine bezogen auf die Drehebene untere Stützfläche im zweiten Montagezustand. Mit Vorteil haben also die obere und die untere Stützfläche in beiden Montagezuständen im Wesentlichen dieselbe Ausrichtung zur Längsachse bzw. zur Drehachse, unterscheiden sich aber in ihrer Höhe beispielsweise in Bezug auf die Fahrbahnebene. Die gleiche Ausrichtung der Stützflächen ermöglicht, dass auch gleiche Tailends verwendbar sind. Mit großem Vorteil kann damit die Bauteil- bzw. Variantenvielfalt weiter reduziert werden. Es versteht sich, dass auch die Stützfläche, welche, wie oben beschrieben, im Wesentlichen quer zur Stützachse steht, derart zur Längsachse bzw. zur Drehachse positioniert ist, dass sie in beiden Montagezuständen zumindest bereichsweise gleich ausgerichtet ist.

Zweckmäßigerweise umfasst die Achsanbindung ein Achsrohr und/oder einen Achsstummel und/oder einen Längslenker und/oder ein Tailend. Die Achsanbindung muss also nicht als Einzelkomponente ausgebildet sein, sondern kann Teil eines jeden der vorgenannten Komponenten sein. Dabei kann die Achsanbindung ganz oder zumindest teilweise als Schweißkonstruktion ausgeführt sein. Auch die zumindest teilweise Fertigung mittels eines Hochdruckumformverfahrens oder eines Schmiedeprozesses ist denkbar. Dabei gilt grundsätzlich, dass die Achsanbindung bevorzugt aus Stahl gefertigt ist. Es können alternativ aber auch andere metallische Werkstoffe wie z. B. Aluminium zum Einsatz kommen. Auch Verbundwerkstoffe, insbesondere Kohlefasematerialen, und Kombinationen der genannten Materialen sind mit Vorteil einsetzbar, sowohl für die Achsanbindung und deren Bestandteile, als auch für den Längslenker, das Tailend und den Achsstummel.

Weitere Vorteile und Merkmale ergeben sich aus der nachfolgenden Beschreibung bevorzugter Ausführungsformen der erfindungsgemäßen Achsanbindung mit Bezug auf die beigefügten Figuren. Einzelne Merkmale der einzelnen Ausführungsformen können dabei im Rahmen der Erfindung miteinander kombiniert werden.

Es zeigen:
- Figur 1:: eine Seitenansicht einer bevorzugten Ausführungsform einer Achsanbindung mit einem als Fortsatz ausgebildeten Verbindungsbereich;
- Figur 2:: eine weitere bevorzugte Ausführungsform einer Achsanbindung in einer Seitenansicht mit einer als Schale ausgebildeten Achsrohraufnahme;
- Figur 3:: eine weitere bevorzugte Ausführungsform einer Achsanbindung in einer Seitenansicht;
- Figur 4a:: eine bevorzugte Ausführungsform einer Achsanbindung mit einer als Schale ausgebildeten Achsrohraufnahme verbunden mit einem Längslenker in einer ersten Montageposition;
- Figur 4b:: die in Figur 4a gezeigte Ausführungsform in einer zweiten Montageposition;
- Figur 5a:: eine bevorzugte Ausführungsform einer Achsanbindung mit einer als Zylinder ausgebildeten Achsrohraufnahme in einer ersten Montageposition;
- Figur 5b:: die aus Figur 5a bekannte Ausführungsform in einer zweiten Montageposition;
- Figur 6:: skizzenhaft dargestellte Achsanbindungen in einer Draufsicht zu einer Drehebene E gesehen;
- Figur 7:: eine weitere bevorzugte Ausführungsform einer Achsanbindung in einer Seitenansicht.

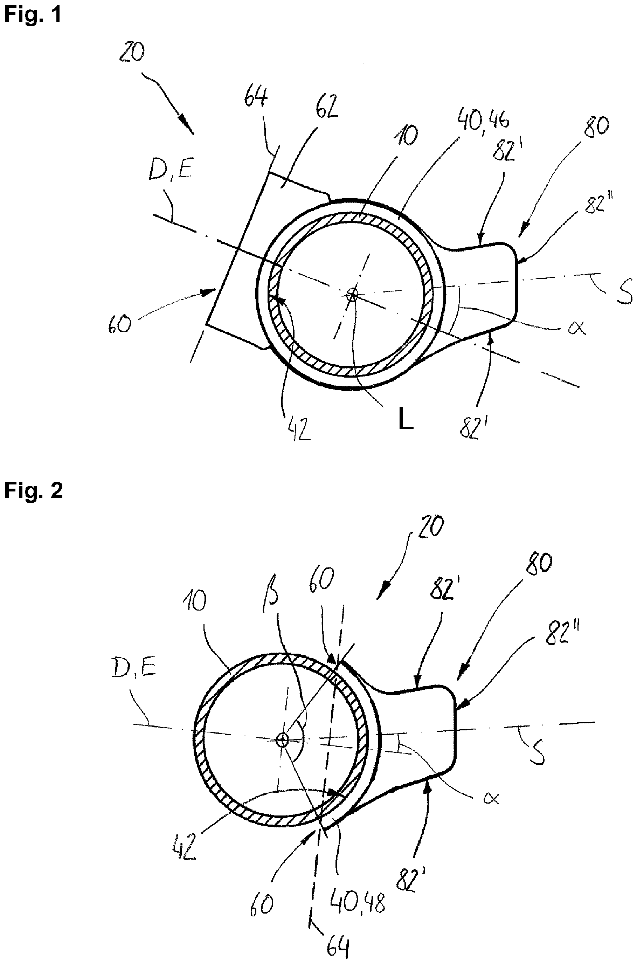

**Fig. 1** zeigt eine bevorzugte Ausführungsform einer Achsanbindung 20 in einer Seitenansicht. Eine Achsrohraufnahme 40 ist als Zylinder 46 ausgebildet, in dessen Innenfläche 42 ein Achsrohr 10 angeordnet ist. Sowohl das Achsrohr 10 als auch die Achsrohraufnahme 40 erstrecken sich parallel zu einer Längsachse L, welche sozusagen einer Mittellinie oder Zylinderachse (ohne Bezugszeichen) des Achsrohrs 10 entspricht. Von der Achsrohraufnahme 40 weg erstreckt sich ein als Fortsatz 62 ausgebildeter Verbindungsbereich 60, welcher symmetrisch zu einer Drehebene E positioniert ist. Weiter bildet der Verbindungsbereich 60 eine Verbindungsebene 64 aus, welche im Wesentlichen senkrecht zur Drehebene E steht.

Die Drehebene E wird von der Längsachse L und einer Drehachse D aufgespannt. Zwischen der Drehachse D und einer Stützachse S wird ein Winkel α gebildet, welcher in besonders bevorzugten Ausführungsformen in einem Bereich von etwa 30° - 60° liegt. Entlang der Stützachse S erstreckt sich ein Stützabschnitt 80, welcher mehrere Stützflächen 82', 82" aufweist.

**Fig. 2** zeigt eine weitere bevorzugte Ausführungsform einer Achsanbindung 20 mit einer als Schale 48 ausgebildeten Achsrohraufnahme 40. Die Achsrohraufnahme 40 bildet einen Umschlingungswinkel β aus, der in der in Figur 2 dargestellten Ausführungsform in einem Bereich von etwa 100° - 120° liegt. Ein Achsrohr 10 ist an einer Innenfläche 42 der Achsrohraufnahme 40 angeordnet. Der kleine Umschlingungswinkel β, von etwa 100° - 120°, ermöglicht eine besonders leichte Anordnung des Achsrohrs 10 an der Achsanbindung 20. Die als Schale 48 ausgebildete Achsrohraufnahme 40 bildet einen Verbindungsbereich 60 aus, welcher eine Verbindungsebene 64 umfasst. Die Verbindungsebene 64 wird sozusagen durch die Kanten der Schale 48 gebildet. Entscheidend ist dabei, dass die Verbindungsebene 64 wie der Verbindungsbereich 60 im Wesentlichen senkrecht zu einer Drehebene E bzw. einer Drehachse D ausgerichtet sind. Von der Achsrohraufnahme 40 weg erstreckt sich ein Stützabschnitt 80 mit Stützflächen 82', 82". Der Stützabschnitt 80 orientiert sich entlang einer Stützachse S, welche einen Winkel α mit der Drehachse D bildet.

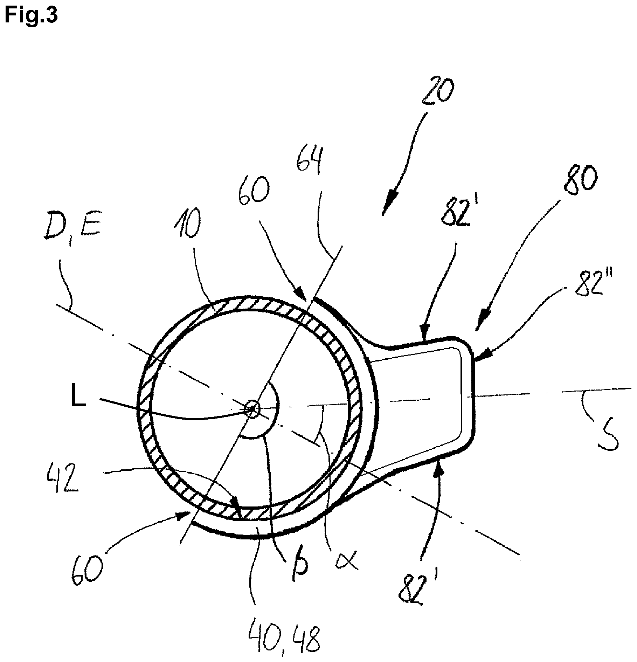

**Fig. 3** zeigt eine weitere bevorzugte Ausführungsform einer Achsanbindung 20 in einer Seitenansicht. Auch hier ist eine Achsrohraufnahme 40 als Schale 48 ausgebildet. Entgegen der Ausführungsform in Figur 2 weist ein Verbindungsbereich 60 einen Umschlingungswinkel β von etwa 180° auf, wodurch eine Verbindungsebene 64 eine Längsachse L der Achsrohraufnahme 40 schneidet. Ein Achsrohr 10 ist an einer Innenfläche 42 der Achsrohraufnahme 40 angeordnet, wobei auch hier durch den Umschlingungswinkel β von etwa 180° eine sehr leichte Anordnung ermöglicht wird. Die Verbindungsebene 64 steht in etwa senkrecht zu einer Drehebene E und einer Drehachse D, wobei die Drehebene E von der Drehachse D und der Längsachse L aufgespannt wird. Von der Achsrohraufnahme 40 weg erstreckt sich ein Stützabschnitt 80, welcher Stützflächen 82', 82" aufweist. Der Stützabschnitt 80 erstreckt sich entlang einer Stützachse S, welche einen Winkel α mit der Drehachse D bildet.

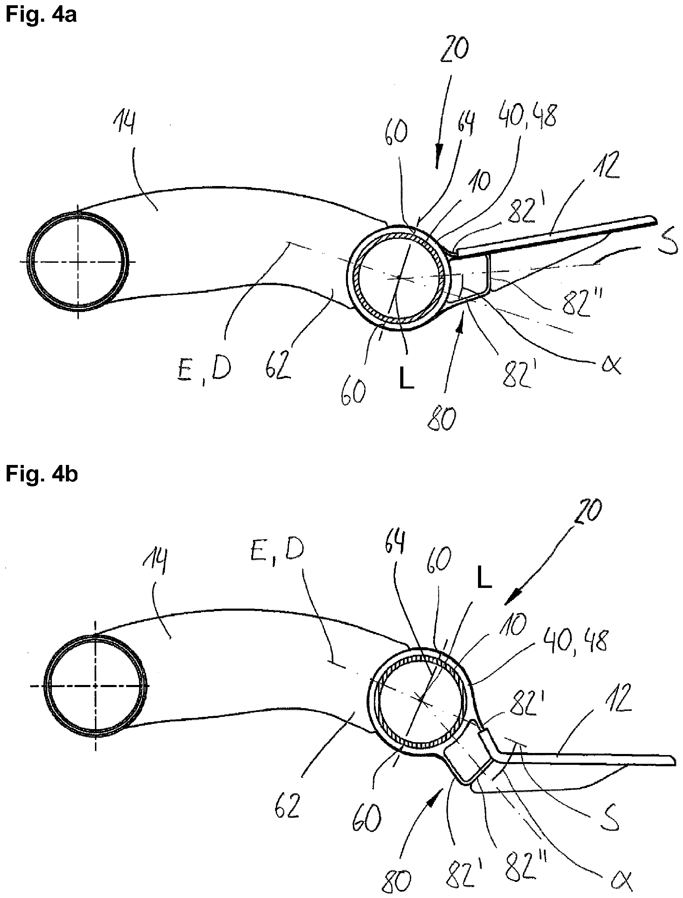

**Fig. 4a** zeigt eine bevorzugte Ausführungsform einer Achsanbindung 20 mit einer als Schale 48 ausgebildeten Achsrohraufnahme 40, an welcher zum einen ein Längslenker 14 an einem Verbindungsbereich 60 angeordnet ist und zum anderen ein Tailend 12 an einem Stützabschnitt 80. Das Tailend 12 stützt sich an dem Stützabschnitt 80 über die Stützfläche 82' ab, welche sich im Wesentlichen entlang einer Stützachse S erstreckt und an einer Stützfläche 82", welche sich im Wesentlichen quer zur Stützachse S erstreckt. Die Stützachse S bildet einen Winkel α mit einer Drehachse D, welche quer zu einer Längsachse L steht. Die Längsachse L stellt die Zylinderachse des Achsrohrs 10 dar. Die Längsachse L und die Drehachse D spannen eine Drehebene E auf, zu welcher senkrecht eine Verbindungsebene 64 positioniert ist. Mit Vorteil sind der Längslenker 14 und die Achsanbindung 20 im Bereich der Verbindungsebene 64 bzw. des Verbindungsbereichs 60 miteinander verbunden, beispielsweise verschweißt.

**Fig. 4b** zeigt die aus Figur 4a bekannte Ausführungsform der Achsanbindung 20, wobei in Figur 4b ein zweiter Montagezustand gezeigt ist. Die aus Figur 4a bekannte Achsanbindung 20 ist um einen Winkel von etwa 180° um die Drehachse D verdreht angeordnet. Vorteilhafterweise hat dies auf die Positionierung zum Längslenker 14 keinerlei Auswirkungen, da der Verbindungsbereich 60 bzw. die Verbindungsebene 64 symmetrisch zur Drehebene E ausgebildet sind. Nur der Stützabschnitt 80, welcher versetzt zur Drehebene E angeordnet ist, wird beim Übergang vom ersten Montagezustand in den zweiten Montagezustand in seiner Lage derart verändert, dass sich unterschiedliche Positionierungsmöglichkeiten für das Tailend 12 ergeben.

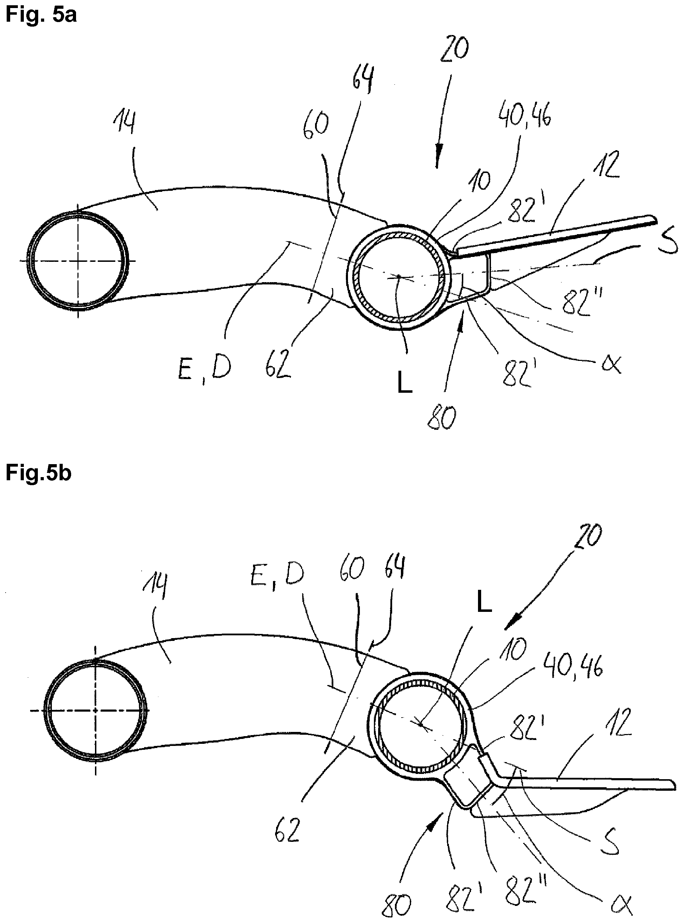

**Fig. 5a** zeigt eine weitere bevorzugte Ausführungsform einer Achsanbindung 20, welche über einen Verbindungsbereich 60 mit einem Längslenker 14 verbunden ist und bei welchem an einem Stützabschnitt 80 ein Tailend 12 angeordnet ist. Eine Achsrohraufnahme 40 ist hier als Zylinder 46 ausgebildet, von welchem sich in Richtung des Längslenkers 14 ein Fortsatz 62 erstreckt. Der Fortsatz 62 und der Längslenker 14 sind mit Vorteil im Bereich einer Verbindungsebene 64 beispielsweise verschweißt oder auch ineinander gesteckt und dann verschweißt. Die Verbindungsebene 64 steht mit Vorteil senkrecht auf einer Drehachse D. Entsprechend ist der Verbindungsbereich 60 zu einer Drehebene E, welche von der Drehachse D und einer Längsachse L aufgespannt wird, symmetrisch positioniert. Zwischen der Drehachse D und der Stützachse S ergibt sich ein Winkel α, wobei sich Stützflächen 82' des Stützabschnitts 80 im Wesentlichen parallel zu der Stützachse S erstrecken, während eine Stützfläche 82" im Wesentlichen quer zur Stützachse S positioniert ist. Durch die unterschiedlich positionierten Stützflächen 82', 82" ergeben sich mannigfaltige Möglichkeiten für die Abstützung des Tailends 12.

**Fig. 5b** zeigt die aus Figur 5a bekannte Ausführungsform der Achsanbindung 20, wobei hier ein zweiter Montagezustand gezeigt ist, in welchem die Achsanbindung 20 um die Drehachse D um einen Winkel von etwa 180° verdreht zum Längslenker 14 angeordnet ist. Mit Vorteil hat dies keinerlei Auswirkung auf die Anbindung zum Längslenker 14, da der Verbindungsbereich 60 symmetrisch zur Drehebene E angeordnet ist. Lediglich der Stützabschnitt 80 ist versetzt zur Drehebene E angeordnet und asymmetrisch geformt.

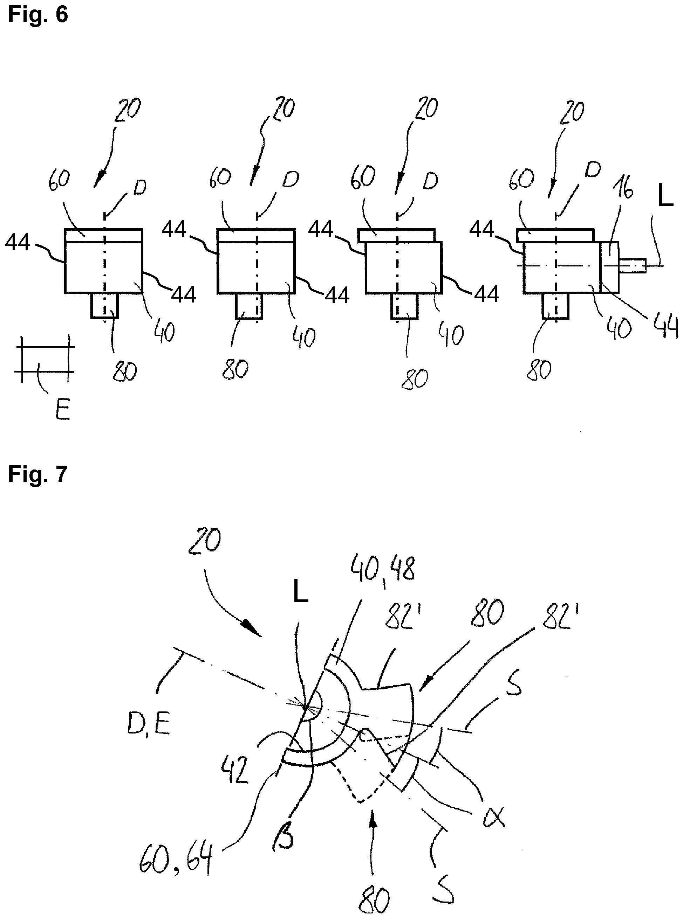

**Fig. 6** zeigt in einer skizzenhaften Darstellung von vier Achsanbindungen 20 in einer Draufsicht zu einer Drehebene E gesehen. Dargestellt sind jeweils eine Drehachse D und die Positionen eines Verbindungsbereichs 60, einer Achsrohraufnahme 40 und eines Stützabschnitts 80 dazu. Dabei soll deutlich werden, dass die Drehachse D ein Art Symmetrielinie des Verbindungsbereichs 60 darstellt, während die Achsrohraufnahme 40 und der Stützabschnitt 80 untereinander, aber auch in Bezug auf den Verbindungsbereich 60 in den unterschiedlichsten Positionen zur Drehachse D anordenbar sind. Die Achsrohraufnahmen 40 weisen Konturen 44 auf, an welchen z. B. Achsstummel 16 oder Achsrohre 10 anordenbar sind. Die Ausführungsform ganz rechts in Figur 6 zeigt skizzenhaft, dass die Achsrohraufnahme 40 seitlich eine Kontur 44 aufweist, an welcher z. B. ein Achsstummel 16 angeordnet ist. Der Achsstummel 16 erstreckt sich vorteilhafterweise entlang einer Längsachse L der Achsrohraufnahme 40.

**Fig. 7** zeigt eine weitere bevorzugte Ausführungsform einer Achsanbindung 20 mit einer als Schale 48 ausgebildeten Achsrohraufnahme 40. Ein Verbindungsbereich 60 bildet einen Umschlingungswinkel β von etwa 180° aus, zur Anordnung eines Achsrohrs (hier nicht dargestellt) an einer Innenfläche 42 der Achsrohraufnahme 40. Eine Verbindungsebene 64 steht senkrecht zu einer Drehachse D. Die Drehachse D bildet zusammen mit einer Längsachse L eine Drehebene E. Dargestellt ist weiter ein Stützabschnitt 80, welcher sich von der Achsrohraufnahme 40 weg erstreckt, in einem ersten und in einem zweiten Montagezustand (gestrichelt dargestellt). Dabei ist der Stützabschnitt 80 bzw. sind dessen Stützflächen 82' derart ausgebildet, dass die jeweils oben liegenden Stützflächen 82' in beiden Montagezuständen im Wesentlichen gleich ausgerichtet sind, was eine Verwendung gleicher oder ähnlicher Tailends ermöglicht. Der Stützabschnitt 80 erstreckt sich dabei, wie bereits bekannt, entlang einer Stützachse S, welche einen Winkel α mit der Drehachse D einschließt. An diesem Beispiel wird auch deutlich, dass der Stützabschnitt 80 durchaus nicht vollkommen versetzt zur Drehachse D angeordnet sein muss, also nicht beispielsweise mit seiner gesamten Außenkontur. Eine Stützfläche 82", in Figur 7 nicht mit einem Bezugszeichen versehen, kann ebenfalls noch explizit derart gestaltet sein, dass deren Ausrichtung in beiden Montagezuständen möglichst exakt beibehalten wird, wodurch eine noch bessere Anordnung gleicher Tailends ermöglicht wird.

### Bezugszeichenliste

- 10: Achsrohr
- 12: Tailend
- 14: Längslenker
- 16: Achsstummel
- 20: Achsanbindung
- 40: Achsrohraufnahme
- 42: Innenfläche
- 44: Kontur
- 46: Zylinder
- 48: Schale
- 60: Verbindungsbereich
- 62: Fortsatz
- 64: Verbindungsebene
- 80: Stützabschnitt
- 82', 82": Stützfläche
- L: Längsachse
- D: Drehachse
- E: Drehebene
- S: Stützachse
- α: Winkel
- β: Umschlingungswinkel

## Patentansprüche

1. Achsanbindung (20), insbesondere für ein Nutzfahrzeug, umfassend eine Achsrohraufnahme (40), welche eine Längsachse (L) aufweist, die parallel zu einem daran anordenbaren Achsrohr (10) orientiert ist,
zumindest einen Verbindungsbereich (60), insbesondere zur Verbindung mit einem Längslenker (14), und
einen Stützabschnitt (80), insbesondere zur Anordnung eines Tailends (12), wobei die Achsanbindung (20) eine Drehachse (D) aufweist, welche die Längsachse (L) schneidet,
wobei der Verbindungsbereich (60) symmetrisch zu einer Drehebene (E) ausgebildet ist, welche von der Drehachse (D) und der Längsachse (L) aufgespannt wird, wobei der Stützabschnitt (80) zumindest bereichsweise quer zur Drehebene (E) versetzt ist, wobei die Achsanbindung (20) in zwei Montagezuständen an dem Achsrohr (10) anordenbar ist, und
wobei sich ein erster Montagezustand von einem zweiten Montagezustand dahingehend unterscheidet, dass die Achsanbindung (20) um einen Winkel von etwa 180° um die Drehachse (D) gedreht ist, und
wobei die Achsanbindung (20) derart ausgelegt ist, dass der Verbindungsbereich (60) im ersten und im zweiten Montagezustand gleich positioniert ist.

2. Achsanbindung (20) nach Anspruch 1,
wobei die Achsrohraufnahme (40) als zumindest bereichsweise geschlossener Zylinder (46) ausgebildet ist, welcher sich zumindest bereichsweise entlang der Längsachse (L) erstreckt.

3. Achsanbindung (20) nach Anspruch 1,
wobei die Achsrohraufnahme (40) als im Wesentlichen zylindrische Schale (48) ausgebildet ist, welche sich zumindest bereichsweise entlang der Längsachse (L) erstreckt.

4. Achsanbindung (20) nach einem der vorhergehenden Ansprüche,
wobei die Achsrohraufnahme (40) zumindest eine Innenfläche (42) und/oder zumindest eine seitliche Kontur (44) zur Anordnung des Achsrohrs (10) und/oder eines Achsstummels (16) aufweist.

5. Achsanbindung (20) nach einem der vorhergehenden Ansprüche,
wobei der Verbindungsbereich (60) zumindest ein Bereich der Achsrohraufnahme (40) ist.

6. Achsanbindung (20) nach einem der Ansprüche 1-4,
wobei der Verbindungsbereich (60) als Fortsatz (62) ausgebildet ist, welcher sich entlang der Drehachse (D) von der Achsrohraufnahme (40) weg erstreckt.

7. Achsanbindung (20) nach einem der vorhergehenden Ansprüche,
wobei der Verbindungsbereich (60) und die Achsrohraufnahme (40) im Wesentlichen entlang der Längsachse (L) versetzt zueinander angeordnet sind.

8. Achsanbindung (20) nach einem der vorhergehenden Ansprüche,
wobei der Stützabschnitt (80) im Wesentlichen entlang der Längsachse (L) versetzt zur Drehachse (D) positioniert ist.

9. Achsanbindung (20) nach einem der vorhergehenden Ansprüche,
wobei sich der Stützabschnitt (80) entlang einer Stützachse (S) erstreckt, und
wobei die Stützachse (S) und die Drehachse (D) einen Winkel (α) von etwa 2-90°, vorzugsweise von etwa 8-60° und besonders bevorzugt von etwa 15-45° bilden.

10. Achsanbindung (20) nach einem der vorhergehenden Ansprüche,
wobei eine bezogen auf die Drehebene (E) obere Stützfläche (82') im ersten Montagezustand einen gleichen Winkel zur Drehachse (D) aufweist wie eine bezogen auf die Drehebene (E) untere Stützfläche (82') im zweiten Montagezustand.

11. Achsanbindung (20) nach einem der vorhergehenden Ansprüche,
umfassend ein Achsrohr (10) und/oder einen Achsstummel (16) und/oder einen Längslenker (14) und/oder ein Tailend (12).

## Claims

1. An axle connection (20), in particular for a utility vehicle, comprising an axle tube receptacle (40), which has a longitudinal axis (L), which is oriented parallel to an axle tube (10) arrangeable thereon,
at least one connecting region (60), in particular for connection to a longitudinal link (14), and
a support section (80), in particular for the arrangement of a tail end (12), wherein the axle connection (20) has an axis of rotation (D), which intersects the longitudinal axis (L),
wherein the connecting region (60) is formed symmetrically with respect to a plane of rotation (E), which is spanned by the axis of rotation (D) and the longitudinal axis (L), wherein the support section (80) is offset transversely with respect to the plane of rotation (E) at least in regions,
wherein the axle connection (20) may be arranged on the axle tube (10) in two mounting states, and
wherein a first mounting state differs from a second mounting state in that the axle connection (20) is rotated by an angle of about 180° about the axis of rotation (D), and
wherein the axle connection (20) is adapted such that the connecting region (60) is positioned in the same manner in the first and in the second mounting state.

2. The axle connection (20) of claim 1,
wherein the axle tube receptacle (40) is formed as a cylinder (46), which is closed at least in regions and which extends along the longitudinal axis (L) at least in regions.

3. The axle connection (20) of claim 1,
wherein the axle tube receptacle (40) is formed as a substantially cylindrical wrap (48), extending along the longitudinal axis (L) at least in regions.

4. The axle connection (20) of any one of the preceding claims,
wherein the axle tube receptacle (40) has at least one inner surface (42) and/or at least one lateral contour (44) for arranging the axle tube (10) and/or an axle stub (16).

5. The axle connection (20) of any one of the preceding claims,
wherein the connecting region (60) is at least one region of the axle tube receptacle (40).

6. The axle connection (20) of any one of claims 1-4,
wherein the connecting region (60) is formed as a continuation (62), extending along the axis of rotation (D) away from the axle tube receptacle (40).

7. The axle connection (20) of any one of the preceding claims,
wherein the connecting region (60) and the axle tube receptacle (40) are arranged substantially along the longitudinal axis (L) offset relative to each other.

8. The axle connection (20) of any one of the preceding claims,
wherein the support section (80) is positioned substantially along the longitudinal axis (L), offset with respect to the axis of rotation (D).

9. The axle connection (20) of any one of the preceding claims,
wherein the support section (80) extends along a support axis (S), and
wherein the support axis (S) and the axis of rotation (D) form an angle (α) of about 2-90°, preferably of about 8-60°, and most preferably of about 15-45°.

10. The axle connection (20) of any one of the preceding claims,
wherein with respect to the plane of rotation (E), an upper support surface (82') relative to the axis of rotation (D) has the same angle in the first mounting state as a lower support surface (82') with respect to the plane of rotation (E) in the second mounting state.

11. The axle connection (20) of any one of the preceding claims,
comprising an axle tube (10) and/or an axle stub (16) and/or a longitudinal link (14) and/or a tail end (12).

## Revendications

1. Accouplement d'essieu (20), en particulier pour un véhicule utilitaire, comprenant
un logement de tube d'essieu (40) qui présente un axe longitudinal (L) qui est orienté parallèlement à un tube d'essieu (10) apte à être agencé sur celui-ci,
au moins une zone de liaison (60), en particulier pour la liaison avec un bras longitudinal (14), et
un tronçon de support (80), en particulier pour l'agencement d'une extrémité dite "de queue" (12),
l'accouplement d'essieu (20) présentant un axe de rotation (D) qui recoupe l'axe longitudinal (L),
la zone de liaison (60) étant réalisée symétriquement à un plan de rotation (E) défini par l'axe de rotation (D) et par l'axe longitudinal (L), le tronçon de support (80) étant décalé au moins localement transversalement au plan de rotation (E), l'accouplement d'essieu (20) étant apte à être agencé dans deux états de montage sur le tube d'essieu (10),
dans lequel un premier état de montage se distingue d'un second état de montage du fait que l'accouplement d'essieu (20) est tourné d'un angle d'environ 180° autour de l'axe de rotation (D), et
l'accouplement d'essieu (20) est conçu de telle sorte que la zone de liaison (60) est positionnée de façon identique dans le premier et dans le second état de montage.

2. Accouplement d'essieu (20) selon la revendication 1,
dans lequel le logement de tube d'essieu (40) est réalisé sous la forme d'un cylindre (46) au moins localement fermé qui s'étend au moins localement le long de l'axe longitudinal (L).

3. Accouplement d'essieu (20) selon la revendication 1,
dans lequel le logement de tube d'essieu (40) est réalisé sous la forme d'une coque (48) sensiblement cylindrique qui s'étend au moins localement le long de l'axe longitudinal (L).

4. Accouplement d'essieu (20) selon l'une des revendications précédentes,
dans lequel le logement de tube d'essieu (40) présente au moins une surface intérieure (42) et/ou au moins un contour latéral (44) pour agencer le tube d'essieu (10) et/ou un moignon d'essieu (16).

5. Accouplement d'essieu (20) selon l'une des revendications précédentes,
dans lequel la zone de liaison (60) est au moins une zone du logement de tube d'essieu (40).

6. Accouplement d'essieu (20) selon l'une des revendications 1 à 4,
dans lequel la zone de liaison (60) est réalisée sous forme de prolongement (62) qui s'étend le long de l'axe de rotation (D) en éloignement du logement de tube d'essieu (40).

7. Accouplement d'essieu (20) selon l'une des revendications précédentes,
dans lequel la zone de liaison (60) et le logement de tube d'essieu (40) sont agencés en décalage l'un par rapport à l'autre sensiblement le long de l'axe longitudinal (L).

8. Accouplement d'essieu (20) selon l'une des revendications précédentes,
dans lequel le tronçon de support (80) est positionné en décalage par rapport à l'axe de rotation (D) sensiblement le long de l'axe longitudinal (L).

9. Accouplement d'essieu (20) selon l'une des revendications précédentes,
dans lequel le tronçon de support (80) s'étend le long d'un axe de support (S) et
l'axe de support (S) et l'axe de rotation (D) définissent un angle (α) d'environ 2 à 90°, de préférence d'environ 8 à 60° et de manière particulièrement préférée d'environ 15 à 45°.

10. Accouplement d'essieu (20) selon l'une des revendications précédentes,
dans lequel une surface de support (82') supérieure par rapport au plan de rotation (E) présente, dans le premier état de montage, par rapport à l'axe de rotation (D) un angle égal à celui d'une surface de support (82') inférieure par rapport au plan de rotation (E), dans le second état de montage.

11. Accouplement d'essieu (20) selon l'une des revendications précédentes,
comprenant un tube d'essieu (10) et/ou un moignon d'essieu (16) et/ou un bras longitudinal (14) et/ou une extrémité dite "de queue" (12).
